Europäisches Patentamt

European Patent Office

Office européen des brevets

(11) Publication number: **0 091 076**
A1

(12) **EUROPEAN PATENT APPLICATION**

(21) Application number: **83103120.8**

(22) Date of filing: **29.03.83**

(51) Int. Cl.³: **C 01 B 33/28**
**B 01 J 20/18, B 01 J 37/24**

(30) Priority: **30.03.82 US 363560**

(43) Date of publication of application:
**12.10.83 Bulletin 83/41**

(84) Designated Contracting States:
**AT BE CH DE FR GB IT LI NL SE**

(71) Applicant: **UNION CARBIDE CORPORATION**
**Old Ridgebury Road**
**Danbury Connecticut 06817(US)**

(72) Inventor: **Brent, Mei-Tak Lok**
**17A Deerwood Drive**
**New City, N.Y. 10956(US)**

(72) Inventor: **Messina, Celeste Anne**
**20 Somerstown Road**
**Ossining, N.Y. 10562(US)**

(74) Representative: **Eggert, Hans-Gunther, Dr.**
**Räderscheidtstrasse 1**
**D-5000 Köln 41(DE)**

(54) **Modification of zeolites by treatment with chlorine gas.**

(57) Described herein is a process for enhancing the hydrophobicity of crystalline zeolites and also crystalline zeolitic aluminosilicate compositions which have enhanced hydrophobic character and modified catalytic properties. The crystalline zeolitic aluminosilicate compositions are contacted with chlorine gas at 200°C to about 1000°C to dealuminize and/or decationize their structure and thereafter are purged with nitrogen gas to remove any entrapped chlorine gas. The crystalline zeolitic aluminosilicate composition can further undergo washing with water to remove any entrapped metal chloride species. The crystalline zeolitic aluminosilicate compositions of this invention are useful as selective hydrophobic adsorbents and catalysts.

## MODIFICATION OF ZEOLITES BY TREATMENT WITH CHLORINE GAS

### Brief Summary of the Invention

Technical Field

This invention is directed in general to a process for enhancing the hydrophobicity of crystalline zeolites and to crystalline zeolite compositions which have enhanced hydrophobic character and modified catalytic properties. More particularly, this invention is directed to crystalline aluminosilicate zeolites which have been treated with chlorine gas to alter (1) the framework aluminum content, (2) surface characteristics, and (3) the acidic sites of the zeolites with resulting modification of both the adsorptive properties, i.e., enhanced hydrophobicity, and catalytic properties of the zeolites.

Background Art

Although there are a few notable exceptions, the vast majority of naturally-occurring and synthetic crystalline aluminosilicate zeolites contain a substantial proportion of $AlO_4$-tetrahedra, i.e., framework aluminum atoms, which together with the $SiO_4$-tetrahedra comprise the zeolite crystal framework. It is generally accepted that these aluminum-containing structural units provide the so-called "acid sites" which account for the catalytic activity of zeolites in such hydrocarbon conversion reactions as catalytic cracking. These same acid sites are also responsible in one or more ways for the adsorptive

13078

preference of most zeolites for strongly polar molecules such as water, i.e., their hydrophilic character.

A number of different techniques have heretofore been proposed to remove framework aluminum atoms from zeolites to create aluminum-deficient lattice structures having fewer acid sites, and consequently less hydrophilicity and more hydrophobicity, and an altered catalytic activity. In some instances the techniques employed are too rigorous to permit sufficient dealumination to significantly alter either the hydrophilicity or the catalytic activity before causing the collapse of the entire crystal lattice. In other cases, the lattice structure of the starting zeolite has sufficient integrity so that the dealumination is permitted to proceed to a degree which engenders a remarkable degree of hydrophobicity in the product zeolite and further enhances its thermal and/or hydrothermal stability.

A number of different techniques have heretofore been known to remove framework aluminum atoms from zeolites, such as mineral acid treatment. One of the more common early techniques for dealuminizing zeolites involves contacting either the hydrogen or the decationized form of the zeolite with a known chelating agent for aluminum, such as ethylene diaminetetraacetic acid (EDTA) or acetylacetone, and removing aluminum as an organometallic complex. A more recent and more widely used procedure involves prolonged contact of non-metallic cation forms of zeolites with steam at elevated temperatures which can exceed 800°C. Although quite effective for the intended purpose,

13078

the steaming procedures are very costly and highly energy-consuming.

French Patent 2,303,764 describes a process for increasing the molar ratio of $SiO_2/Al_2O_3$ in the crystalline skeleton of zeolites having $SiO_2/Al_2O_3$ molar ratios of less than 5. The zeolites are first dehydrated by heating to a temperature of at least 400°C in a reactor equipped with at least one opening in the presence of air or inert gases. Thereafter, gases containing chlorine and/or hydrochloric acid are reacted with the dehydrated zeolite at temperatures between 400°C and 700°C. It is stated that the zeolite product can then be treated by washing with aqueous solutions of ammonium salts or salts which give ammonium ions, strong aqueous mineral acids, caustic soda or alkaline solutions, or distilled water. Example 11 illustrates that the capacity of adsorption of zeolites with respect to water vapor is practically not altered by treatment of the zeolites according to the process described therein.

U.S. Patent 4,297,335 assigned to Union Carbide Corporation describes crystalline zeolite compositions which have been treated with fluorine gas to alter the framework aluminum content and acidic sites and thereby enhance the hydrophobic character of the zeolites. The crystalline zeolite compositions have at least 50 percent of the framework aluminum atoms not associated with metal cations and are contacted with fluorine at a temperature of from about 50°F to 400°F.

H. K. Beyer and I. Belenykaja, A New Method for the Dealumination of Faujasite-Type Zeolites, Catalysis by Zeolites, Printed in The Netherlands, 203-209 (1980) describes the dealumination of faujasite-type zeolites, particularly Y zeolites, using silicon tetrachloride as the dealuminizing agent.

However, none of these references disclose a process for enhancing the hydrophobicity of crystalline zeolites according to the present invention in which crystalline aluminosilicate zeolites are treated with chlorine gas and thereafter purged with nitrogen gas to alter (1) the framework aluminum content, (2) surface characteristics and (3) the acidic sites of the zeolites with resulting modification of both the adsorptive properties, i.e., enhanced hydrophobicity, and catalytic properties of the zeolites. In addition, the crystalline aluminosilicate zeolites of the present invention have extended storage capabilities due to the removal of entrapped chlorine gas from the treated activated aluminosilicate zeolite by purging the zeolite with nitrogen gas. The removal of entrapped chlorine gas can prevent the formation of aqueous hydrochloric acid upon the introduction of any moisture into the zeolite. Sufficient amounts of aqueous hydrochloric acid can cause degradation of the structural aluminum framework of the zeolite especially at $SiO_2/Al_2O_3$ molar ratios of less than about 10.

Disclosure of Invention

It is therefore the primary object of the present invention to provide an alternate process for enhancing the hydrophobic character and stability of zeolites by decreasing the number of acia sites in the framework structure. This primary object is accomplished by the process which comprises:

(a) providing an activated crystalline zeolitic aluminosilicate having an initial $SiO_2/Al_2O_3$ molar ratio of at least 5;

(b) contacting said activated aluminosilicate with substantially pure chlorine gas at a temperature of from about 200°C to about 1000°C for a period of time sufficient to react the chlorine gas with a significant amount of structural aluminum in said activated aluminosilicate to increase the initial $SiO_2/Al_2O_3$ molar ratio of the activated aluminosilicate; and

(c) purging the activated aluminosilicate with a purge gas for a sufficient time to remove entrapped chlorine gas from the treated activated aluminosilicate.

A preferred embodiment of the present invention comprises washing the activated aluminosilicate with water for a sufficient time to remove entrapped metal chloride species such as aluminum chloride, alkali metal chlorides and alkaline earth metal chlorides from the treated activated aluminosilicate. Metal cations associated with the chlorine treated activated aluminosilicate can be replaced with non-metallic hydrogen cations by this water washing step. Conventional ion exchange techniques must first treat a metal cation aluminosilicate with, for example, an ammonium chloride solution and thereafter the resulting nonmetallic ammonium cation aluminosilicate is calcined at elevated temperatures to give a nonmetallic hydrogen cation aluminosilicate. Thus, conventional ion exchange techniques can be eliminated by utilizing the water washing step.

Yet another preferred embodiment of the present invention comprises calcining the activated aluminosilicate at a temperature of from 500°C up to the crystal destruction temperature of the zeolite to remove some or all of the non-metallic cations to produce the corresponding decationized zeolite. The water washing step and the calcination step can be used in the process of this invention in combination in either order or either step may be used alone.

A further object of this invention is to provide crystalline zeolitic aluminosilicate compositions selected from the group consisting of the zeolites identified by the numbered examples in the instant specification having the properties set forth for the numbered examples in Tables I through VIII hereinbelow and produced according to the claimed process of this invention. The crystalline zeolitic aluminosilicate compositions prepared in accordance with the process of this invention have a crystal structure selected from the group consisting of erionite, mordenite, zeolite Y, zeolite L and zeolite LZ-105 including non-cation forms and cation forms containing cations selected from the group consisting of alkali metals, alkaline earth metals, ammonium and hydrogen.

Various other objects and advantages of this invention will become apparent to those skilled in the art from the accompanying description and disclosure.

13078

## Detailed Description

Crystalline aluminosilicate zeolites suitably treated in accordance with the present invention include among others erionite, mordenite, zeolite Y, zeolite L, zeolite LZ-105, zeolite omega, zeolite beta, zeolite ZSM-5, zeolite ZSM-11, zeolite ZSM-12, zeolite ZSM-34 and zeolite ZSM-35. Both naturally occurring and synthetically prepared zeolites can be used. Zeolite Y is disclosed in U.S. Patent 3,130,007; zeolite L is disclosed in U.S. Patent 3,216,789; zeolite LZ-105 is disclosed in U.S Patent 4,257,885; zeolite omega is disclosed in U.S. Patent 4,241,036; zeolite beta is disclosed in U.S. Patent 3,308,069; zeolite ZSM-5 is disclosed in U.S. Patent 3,702,886; zeolite ZSM-11 is disclosed in U.S. Patent 3,709,979; zeolite ZSM-12 is disclosed in U.S. Patent 3,832,449; zeolite ZMS-34 is disclosed in U.S. Patent 4,086,186; and zeolite ZSM-35 is disclosed in U.S. Patent 3,992,466. The preparation of crystalline aluminosilicate zeolites utilized in the working examples hereinbelow is described in each example. The preferred crystalline aluminosilicate zeolites for use in the present invention have a crystal structure selected from the group consisting of erionite, mordenite, zeolite Y, zeolite L and zeolite LZ-105 including non-cation forms and cation forms containing cations selected from the group consisting of alkali metals, alkaline earth metals, ammonium and hydrogen. The activated crystalline aluminosilicate zeolites utilized in the process of this invention have an initial $SiO_2/Al_2O_3$ molar ratio of at least 5, preferably from 5 to about 190.

The zeolite species can be used in their non-metallic cation forms as well as their as-synthesized metallic cation forms without further modification of their cation population. The zeolite species can also be utilized in their decationized form. In those cases in which it is desirable to decrease the proportion of metal cations associated with the $AlO_4$-tetrahedra prior to their use in the process of this invention, conventional ion exchange techniques can be resorted to in order to replace a sufficient proportion of metal cations with non-metallic cations such as hydrogen, ammonium or quaternary ammonium species. The zeolites can, if desired, be calcined to thermally remove some or all of the non-metallic cations to produce the corresponding decationized form. Calcination at a temperature of about 400°C for two hours is usually sufficient to activate hydrated zeolites through the evolution of the water of hydration.

The activated crystalline aluminosilicate zeolites are contacted with substantially pure chlorine gas, preferably 100% pure chlorine gas, at a temperature range of from about 200°C to about 1000°C. Lower temperatures generally cannot be used because chlorine gas does not react with the structural aluminum of the zeolite at these lower temperatures. Higher temperatures generally can cause at least partial destruction of the crystalline structure of the zeolite. The preferred temperature for contacting pure chlorine gas with the activated crystalline aluminosilicate zeolite is from about 400°C to about 800°C. The process of this invention is preferably carried out at ambient pressure, however both atmospheric and superatmospheric pressure conditions may be employed in this process.

The chlorine gas is reacted with a significant amount of structural aluminum within the activated crystalline aluminosilicate zeolite at the temperatures described above and for a sufficient period of time to increase the initial $SiO_2/Al_2O_3$ molar ratio of the activated crystalline aluminosilicate zeolite. In general, the reaction time can vary from a few minutes or less to several hours or longer, i.e., from 1 minute or shorter to 10 hours or longer. The preferred reaction time is from about one hour to about four hours. It is readily appreciated that the required reaction time will be influenced by the reaction temperature, total pressure, concentration and flow rate of chlorine gas, concentration and choice of the activated crystalline aluminosilicate zeolite and other factors. The process of the present invention is suitably conducted under operative conditions which give reasonable chlorine reaction rates and, of course, the desired increase in the initial $SiO_2/Al_2O_3$ molar ratio of the activated crystalline aluminosilicate zeolite.

After the crystalline aluminosilicate zeolites are reacted with chlorine gas under the above described operational conditions, the zeolites are purged with a purge gas such as nitrogen, dry air or the inert gases for a sufficient time to remove entrapped chlorine gas from the treated activated crystalline aluminosilicate zeolite. In general, the purging time is not narrowly critical can vary from a few seconds to several minutes or

13078

longer. The preferred purging time is from about 10 minutes to about 30 minutes. However, the total purging time will be influenced by the concentration and choice of the activated crystalline aluminosilicate zeolite, the amount of chlorine gas entrapped in the zeolite and other factors. The purging step of the present invention is preferably conducted under operative conditions which give essentially complete removal of residual chlorine gas from the treated activated crystalline aluminosilicate zeolite. The preferred purging gas for use in this invention is nitrogen.

The removal of essentially all residual chlorine gas in the activated crystalline aluminosilicate zeolite by purging with nitrogen gas provides for extended storage capabilities of the zeolite products. The removal of entrapped chlorine gas can prevent the formation of aqueous hydrochloric acid upon the introduction of any moisture into the zeolite product. Sufficient amounts of aqueous hydrochloric acid can cause degradation of the structural aluminum framework of the zeolite product especially at $SiO_2/Al_2O_3$ molar ratios of less than about 10. The hydrophobic character of the zeolite product attained by treating the zeolite according to the process of this invention is likewise deteriorated as a result of the action of aqueous hydrochloric acid on the structural aluminum framework causing degradation thereof.

The chlorine treated and purged crystalline aluminosilicate zeolite can be washed with water for a sufficient time to remove any entrapped metal chlorides from the treated crystalline aluminosilicate zeolite. Metal chlorides such as alkali metal chlorides, alkaline earth metal chlorides and aluminum chloride are removed from the crystalline aluminosilicate zeolite structure to further enhance the hydrophobic character of the zeolite product. Such metal chlorides can occupy the pore volume surface and cause high water adsorption near saturation. When using crystalline aluminosilicate zeolites in their cation forms including alkali metal cations and alkaline earth metal cations in the process of this invention, it is preferred to wash the chlorine treated aluminosilicate zeolite to remove any entrapped metal chloride species from the zeolite. Because many metal chlorides sublime at relatively low temperatures, the chlorine treatment step at the indicated elevated temperatures can also be used to remove impurities from the zeolite. Chlorine treated crystalline aluminosilicate zeolites in their ammonium, hydrogen or decationized form can exhibit structural dealumination, silicon atom insertion, stabilization, altered catalytic activity and enhanced hydrophobicity upon utilization of the water washing step. It has been suprisingly found as a result of the present invention that metal cations associated with the activated crystalline aluminosilicate zeolite can be replaced by non-metallic hydrogen cations by utilizing only the water washing step. Thus, conventional ion exchange techniques can be eliminated by utilizing the water washing step. In general, the washing time can vary from a few minutes to several hours or longer or even days. The total washing time will be influenced by the concentration and choice of

crystalline aluminosilicate zeolite, the amount of metal chlorides blocking the pore structure of the zeolite and other factors. The water washing step of the present invention is preferably conducted to remove essentially all metal chlorides from the treated activated crystalline aluminosilicate zeolite to enhance the hydrophobic character of the zeolite product.

The chlorine treated crystalline aluminosilicate zeolites can further undergo calcination at a temperature of from 500°C up to the crystal destruction temperature of the zeolites. This calcination step can remove non-metallic cations such as ammonium cations from the treated aluminosilicate zeolite to give, if desired, an essentially decationized zeolite product. Decationization of crystalline aluminosilicate zeolites in their metal cation form is evidenced by the formation of water-soluble metal chlorides. The calcination step in addition to the process step involving reacting chlorine with the structural aluminum of the zeolite at elevated temperatures provide for high purity aluminosilicate zeolite products. The chlorine treated zeolites of this invention exhibit dealumination, decationization and enhanced hydrophobicity while retaining a high level of crystallinity even at elevated treatment temperatures utilized in the process described herein.

The crystalline aluminosilicate zeolite compositions prepared in accordance with the process of the present invention can be used as selective hydrophobic adsorbents or as catalysts in, for example, hydrocarbon cracking reactions. These zeolite compositions have the properties set forth for the numbered examples in Tables I through VIII hereinbelow. The preferred crystalline aluminosilicate zeolite compositions prepared by the process of this invention have a crystal structure selected from the group consisting of erionite, mordenite, zeolite Y, zeolite L and zeolite LZ-105 including non-cation forms and cation forms containing cations selected from the group consisting of alkali metals, alkaline earth metals, ammonium and hydrogen.

Although this invention has been described with respect to a number of details, it is not intended that this invention should be limited thereby. The examples which follow are intended solely to illustrate the embodiments of this invention which to date have been determined and are not intended in any way to limit the scope and the intent of this invention.

In carrying out the process of this invention, it is advantageous to utilize a quartz reactor having means for evacuating chlorine gas and nitrogen gas therefrom as well as means for regulating the temperature of the zeolite itself. The apparatus used in the following Examples 1-46 and Comparative Examples A-AA included a high temperature tubular quartz reactor to which was attached a Pyrex glass condenser. A heating mantle or furnace was used to heat the quartz reactor. The temperature of a sample in the quartz reactor was measured with a thermocouple imbedded in a thermocouple well located in the center of the reactor. A temperature controller was used to regulate the temperature to within ± 5°C. The flow

- 14 -

of chlorine gas and nitrogen gas into the quartz reactor was controlled with a pressure regulator and flow meter. The flow meter was made of Inconel and Monel specified for chlorine gas. Gas escaping from the Pyrex glass condenser was directed to a scrubber system consisting of a soda lime trap and a sodium bisulfite solution vented to the top of a hood. All of the connections within the apparatus were made with Teflon shrinkable tube and Teflon tubing. The general procedure included: (1) introducing the crystalline zeolitic aluminosilicate starting material into the quartz reactor; (2) adjusting the temperature to the indicated temperatures in the Examples under a continuous flow of nitrogen to remove all water of hydration; (3) introducing pure chlorine gas at a minimal flow rate which results in a continuous flow of chlorine gas through the system for a period sufficient to react with the amount of structural aluminum needed to achieve the desired $SiO_2/Al_2O_3$ molar ratio in the zeolite; and then (4) flushing the quartz reactor with nitrogen gas to remove all residual chlorine gas.

In evaluating the hydrophobic character of the chlorine-treated crystalline aluminosilicate zeolite products of the present invention, a "shake-test" procedure was employed, in which 0.5 grams of the activated zeolite sample was introduced into 5 milliliters of a solution of 1.0 volume percent n-butanol in water. The slurry of zeolite and solution was shaken for about 120 minutes at room temperature, and then the liquid phase was analyzed for residual n-butanol content. The amount of n-butanol adsorbed by the zeolite sample was used to determine the percent of n-butanol adsorbed, thereby providing a measure of the relative preference of the zeolite for the less polar adsorbate, which provided a measure of the hydrophobicity of the zeolite. Another test procedure was an "n-hexane delta-loading" test wherein a test sample of the zeolite was activated under vacuum and then exposed to approximately 20 torr of water vapor at room temperature. After the adsorbed water loading on the zeolite reached a steady state under these conditions, n-hexane, at a partial pressure of 40-50 mm. Hg., was introduced into the water-saturated atmosphere over the zeolite. The weight gain of the zeolite mass due to adsorption of the n-hexane under these conditions (the delta n-hexane loading) directly corresponds to the degree of hydrophobicity of the zeolite. The greater the weight gain due to n-hexane adsorption the greater the degree of hydrophobicity.

In evaluating the catalytic character of the chlorine treated aluminosilicate zeolite products as described in Examples 38-46 and Comparative Examples W-AA, a test procedure was employed involving the catalytic cracking of premixed n-butane at 2 mole percent in a helium stream. The mixture containing 2 mole percent n-butane in helium was obtained from Union Carbide Corporation. The mixture underwent cracking in a one-half inch outside diameter quartz tube reactor into which was added 0.5 to 5.0 grams at 20-40 mesh of a crystalline zeolitic aluminosilicate sample to be tested. The crystalline zeolitic aluminosilicate was activated in situ for 60 minutes at 500°C under 200 $cm^3$/minute dry helium purge. The mixture containing 2 mole percent n-butane in helium was then passed at a rate of 50 cm$^3$/minute over the crystalline zeolitic aluminosilicate for 40 minutes, with a product stream analysis carried out at 10 minute intervals. The first order rate constant was then calculated to determine the activity of the zeolite catalyst as follows:

First Order Rate Constant (cm$^3$/gm min) $= \dfrac{F \ln (1-c)}{W}$

where F is the flow rate in cm$^3$/min., W is the activated crystalline zeolitic aluminosilicate sample weight in grams and c is the mole fraction of n-butane consumed.

## EXAMPLES 1-4 AND COMPARATIVE EXAMPLE A

A series of five 50 gram samples of synthetic decationized, steamed Y-type zeolites were prepared by pelletizing approximately 20% dry weight of nitric acid peptized Catapal, a trademark of Condea, consisting of hydrated alumina having 74.2% Al$_2$O$_3$ and 25.8% H$_2$O, with approximately 80% dry weight of Linde Y-82 zeolite, a tradename of Union Carbide Corporation, having a SiO$_2$/Al$_2$O$_3$ molar ratio of 5.4 and a Na$_2$O/Al$_2$O$_3$ molar ratio of 0.017. After steaming all of the samples at 600°C, the samples designated as Examples 1-4 were contacted with 100% chlorine gas for the time periods and temperatures indicated in Table I. The sample designated as Comparative Example A was not treated with chlorine gas. The chlorine treated samples were thereafter purged with nitrogen gas at the same chlorine treatment temperatures indicated in Table I for about 10 minutes. All of the samples were then tested for hydrophobicity using the n-hexane delta-loading test as previously described,

with the results set forth in Table I. The samples treated with 100% chlorine gas at various temperatures show higher n-hexane delta loading values, and thus greater hyarophobicity, than the comparative samples not treated with chlorine gas.

## EXAMPLES 5-7 AND COMPARATIVE EXAMPLES B AND C

A series of three samples of synthetic large pore hydrogen mordenite ($H^+$-moraenite) obtained from the Norton Company as Zeolon H, having a $SiO_2/Al_2O_3$ molar ratio of 15.5 and a $Na_2O/Al_2O_3$ molar ratio of 0.04, as well as two samples of a crystalline zeolitic molecular sieve composition, hereinafter designated LZ-105, within the scope of U.S. Patent 4,257,885 assigned to Union Carbide Corporation, having a $SiO_2/Al_2O_3$ molar ratio of 40.6 ana a $Na_2O/Al_2O_3$ molar ratio of 0.82, were preparea by pelletizing approximately 20% dry weight of nitric acid peptized Catapal aescribed in Examples 1-4 with approximately 80% dry weight of the respective zeolite. The samples designatea as Examples 5-7 were contactea with 100% chlorine gas for 60 minutes at the temperatures inaicated in Table I. The samples aesignated as Comparative Examples B and C were not treaced with chlorine gas. The chlorine treatea samples were thereafter purged with nitrogen gas at the same chlorine treatment temperatures indicated in Table I for about 10 minutes. All of the samples were then tested for hydrophobicity using the n-hexane delta-loading technique as previously described, with the results set forth in Table I. The samples treatea with 100% chlorine gas at various temperatures show higher n-hexane aelta loaaing values, and thus greater hydrophobicity, than the comparative samples not treated with chlorine gas.

TABLE I

| Example | Zeolite | Treatment Conditions Time, min. | Temperature, °C. | n-Hexane delta Loading, wt.% |
|---------|---------|------|------|------|
| A | Y - Type[a] | 0 | --- | -1.6 |
| 1 | Y - Type[b] | 30 | 400 | 1.0 |
| 2 | Y - Type[b] | 45 | 600 | 0.6 |
| 3 | Y - Type | 45 | 700 | 0.3 |
| 4 | Y - Type | 60 | 750 | 2.5 |
| B | H[+]-mordenite | 0 | --- | -0.2 |
| 5 | H[+]-mordenite | 45 | 700 | 0.0 |
| 6 | H[+]-mordenite | 60 | 750 | 0.3 |
| C | LZ-105 | 0 | --- | 3.1 |
| 7 | LZ-105 | 60 | 750 | 4.4 |

[a]Calcined for 45 minutes at 700°C.

[b]Calcined for 2 hours at 700°C. after chlorine treatment.

13078

EXAMPLES 8-10 AND COMPARATIVE EXAMPLE D

A series of three samples designated as Examples 8-10 consisting of synthetic large pore hydrogen mordenite obtained from the Norton Company as described in Examples 5-7 were contacted with 100% chlorine gas for 60 minutes at the temperatures set forth in Table II. One sample designated as Comparative Example D consisting of the synthetic large pore hydrogen mordenite obtained from the Norton Company as described above was not treated with chlorine gas. The chlorine treated samples were thereafter purged with nitrogen gas at the same chlorine treatment temperatures indicated in Table II for about 10 minutes. The chemical compositions of all of the samples were then determined by chemical analysis. The chemical analyses show the retention of chloride by the chlorine treated materials as illustrated by the data set forth in Table II.

Table II

| Example | Zeolite | Treatment Conditions | | Dry wt. % of Oxides | | | Cl | $SiO_2/Al_2O_3$ Molar Ratio |
|---------|---------|-----------|--------------------|-----------|--------|--------|------|------|
| | | Time, min. | Temperature, °C. | $Al_2O_3$ | $SiO_2$ | $Na_2O$ | | |
| D | $H^+$-mordenite | 0 | --- | 9.8 | 89.4 | 0.26 | --- | 15.5 |
| 8 | $H^+$-mordenite | 60 | 600 | 9.8 | 90.0 | 0.25 | 0.84 | 15.6 |
| 9 | $H^+$-mordenite | 45 | 700 | 9.6 | 90.7 | 0.25 | 1.41 | 16.1 |
| 10 | $H^+$-mordenite | 60 | 750 | 9.8 | 90.1 | 0.28 | 1.12 | 15.6 |

- 21 -

13078

EXAMPLES 11-12 AND COMPARATIVE EXAMPLES E-F

One sample designated as Example 11 consisting of synthetic Y-type zeolite prepared as described in Examples 1-4 and one sample designated as Example 12 consisting of synthetic large pore hydrogen mordenite obtained from the Norton Company as described in Examples 5-7 were contacted with 100% chlorine gas for 60 minutes at 750°C. The samples designated as Comparative Examples E and F consisting respectively of the synthetic Y-type zeolite and the synthetic large pore hydrogen modenite prepared as described above were not treated with chlorine gas. The chlorine treated samples were thereafter purged with nitrogen gas at 750°C for about 10 minutes. All of the samples were then tested for hydrophobicity using the aqueous n-butanol solution shake test as previously described, with the results set forth in Table III. The samples treated with 100% chlorine gas at 750°C show less n-butanol remaining in the test solution, and thus greater hydrophobicity, than the comparative samples not treated with chlorine gas.

## Table III

| Example | Zeolite | Treatment Conditions | | Shake Test, % n-butanol remaining in test solution |
| | | Time, min. | Temperature, °C. | |
| --- | --- | --- | --- | --- |
| E | Y-Type | 0 | --- | 90 |
| 11 | Y-Type | 60 | 750 | 61 |
| F | H$^+$-mordenite | 0 | --- | 100 |
| 12 | H$^+$-mordenite | 60 | 750 | 91 |

- 23 -

13078

EXAMPLES 13-19 AND COMPARATIVE EXAMPLES G-H

A series of four samples designated as Examples 13-16 consisting of synthetic Y-type zeolite prepared as described in Examples 1-4 and a series of three samples designated as Examples 17-19 consisting of synthetic large pore hydrogen mordenite obtained from the Norton Company as described in Examples 5-7 were treated with 100% chlorine gas for the time periods and temperatures set forth in Table IV. The samples designated as Comparative Examples G and H consisting respectively of the synthetic Y-type zeolite and the synthetic large pore hydrogen mordenite prepared as described above were not treated with chlorine gas. The chlorine treated samples were thereafter purged with nitrogen gas at the same chlorine treatment temperatures indicated in Table IV for about 10 minutes. All of the samples were then loaded into a quartz spring McBain-Bakr apparatus to determine both their oxygen adsorption capacity at 100 torr oxygen pressure at -183°C as well as their water vapor pressure at ambient room temperature. The generally lower water adsorption for the chlorinated samples when compared to their untreated precursors having comparable crystallinity (as indicated by the $O_2$-adsorption capacity) is a clear indication of the enhanced degree of hydrophobicity attained. In general, the samples treated with 100% chlorine gas at various temperatures show very little structural deterioration (as indicated by the $O_2$-adsorption capacity). The results are set forth in Table IV.

<u>Table IV</u>

| Example | Zeolite | Treatment Conditions | | Adsorption Wt. % | | Wt. Ratio |
| | | Time, min. | Temperature, °C. | $O_2$, -183°C. 100 torr | $H_2O$, ambient 4.6 torr | $H_2O/O_2$ Loading |
|---------|---------|------------|------------------|------------------------|--------------------------|-----------|
| G  | Y-Type          | 0  | --- | 21.8 | 16.4 | 0.75 |
| 13 | Y-Type          | 30 | 400 | 21.4 | 16.7 | 0.78 |
| 14 | Y-Type          | 45 | 600 | 21.0 | 15.6 | 0.74 |
| 15 | Y-Type          | 45 | 700 | 21.5 | 17.2 | 0.80 |
| 16 | Y-Type          | 60 | 750 | 20.2 | 12.2 | 0.60 |
| H  | $H^+$-mordenite | 0  | --- | 20.3 | 15.1 | 0.74 |
| 17 | $H^+$-mordenite | 45 | 700 | 18.6 | 10.9 | 0.59 |
| 18 | $H^+$-mordenite | 60 | 750 | 16.7 | 5.0  | 0.30 |
| 19 | $H^+$-mordenite | 60 | 800 | 13.0 | 2.1  | 0.16 |

EXAMPLES 20-29 AND COMPARATIVE EXAMPLES I-K

A series of five samples designated as Examples 20-24 consisting of synthetic Y-type zeolite prepared as described in Examples 1-4, four samples designated as Examples 25-28 consisting of synthetic large pore hydrogen mordenite obtained from the Norton Company as described in Examples 5-7, and one sample designated as Example 29 consisting of hydrogen erionite ($H^+$ - erionite) prepared by steaming at $600^\circ$C and then pelletizing with approximately 20% dry weight of nitric acid peptized Catapal as described in Examples 1-4 with approximately 80% dry weight of Linde E-8 zeolite, a tradename of Union Carbide Corporation; having a $SiO_2/Al_2O_3$ molar ratio of 7.4 and a $(Na_2O+K_2O)/Al_2O_3$ molar ratio of 0.10. were contacted with 100% chlorine gas at the temperatures and time periods set forth in Table V. The samples designated as Comparative Examples I, J and K consisting respectively of the synthetic Y-type zeolite, synthetic large pore hydrogen mordenite and hydrogen erionite prepared as described above were not treated with chlorine gas. The chlorine treated samples were thereafter purged with nitrogen gas at the chlorine treatment temperatures indicated in Table V for about 10 minutes. All of the samples were then analyzed using a Fourier transform I.R. spectrometer and standard KBr pellet techniques. The pertinent treatment data as well as peak positions of prominent I.R. bands are set forth in Table V. Shifts in these bands to higher wave numbers in the chlorine-treated samples, as compared with the untreated comparative samples, coupled with a sharpening of some of the bands identified by "s",

are strong evidence of structural dealumination and stabilization respectively.

## EXAMPLES 30-32 AND COMPARATIVE EXAMPLES L-N

For the purpose of comparison with Examples 20-29, a series of three samples of various synthetic zeolites in their alkali cation form, including one sample designated as Example 30 consisting of $Na^+,K^+$ - erionite prepared by pelletizing approximately 20% dry weight of nitric acid peptized Catapal as described in Examples 1-4 with approximately 80% dry weight of Linde E-5 zeolite, a tradename of Union Carbide Corporation, having a $SiO_2/Al_2O_3$ molar ration of 7.1 and a $(Na_2O + K_2O)/Al_2O_3$ molar ratio of 0.90, one sample designated as Example 31 consisting of $Na^+$ - mordenite, also known as $Na^+$-zeolon obtained from the Norton Company having a $SiO_2/Al_2O_3$ molar ratio of 11.5 and a $Na_2O/Al_2O_3$ molar ratio of 0.82 and one sample designated as Example 32 consisting of $K^+$ - L zeolite prepared by pelletizing approximately 20% dry weight of nitric acid peptized Catapal as described in Examples 1-4 with approximately 80% dry weight of Linde K-L zeolite, a tradename of Union Carbide Corporation, having a $SiO_2/Al_2O_3$ molar ration of 6.1 and a $K_2O/Al_2O_3$ molar ratio of 0.92 were contacted with 100% chlorine gas at the temperatures and time periods set forth in Table V. The samples designated as Comparative Examples L, M and N consisting respectively of the $Na^+$, $K^+$ - eronite, $Na^+$ - mordenite and $K^+$ - L zeolite prepared as described above were not treated with chlorine gas. The chlorine treated samples were

13078

thereafter purged with nitrogen gas at the chlorine treatment temperatures indicated in Table V for about 10 minutes. Using the experimental procedure set forth for examples 20-29, the pertinent treatment data and prominent band positions from the I.R. spectra are set forth in Table V. Shifts in the bands to higher wave numbers in the chlorine-treated materials indicate dealumination. However, in contrast with Examples 20-29, there was no sharpening of bands which indicates that stabilization had not occurred with these zeolites in their alkali cation form.

## COMPARATIVE EXAMPLES O-Q

For the purpose of comparison with the zeolites in Examples 20-32 two samples designated as Comparative Examples O and P consisting of synthetic Y-type zeolite prepared as described in Examples 1-4 and one sample designated as Comparative Example Q consisting of synthetic large pore hydrogen mordenite obtained from the Norton Company as described in Examples 5-7 were calcined in air for 120 minutes at the temperatures indicated in Table V without treatment by chlorine gas. The pertinent data and prominent band positions from the I.R. spectra, based on the experimental procedure set forth for Examples 20-29, are set forth in Table V. While shifting of the bands to higher wave numbers occurred, the shift is less than that which is found for the same zeolite samples which underwent chlorine treatment at the same temperatures indicating less dealumination. In addition, there is no sharpening of the bands to indicate stabilization.

## Table V

| Example | Zeolite | Treatment Conditions | | I.R. Band Positions, $cm^{-1}$ | | |
| | | Time, min. | Temperature, °C. | | | |
|---------|---------|------------|------------------|------|------|------|
| I | Y-Type | 0 | --- | 1060 | 825 | 599 |
| 20 | Y-Type | 20 | 202 | 1062[s] | 826[s] | 598 |
| 21 | Y-Type | 30 | 413 | 1058[s] | 826[s] | 600[s] |
| 22 | Y-Type | 45 | 607 | 1069[s] | 831[s] | 608 |
| 23 | Y-Type | 45 | 705 | 1074 | 835[s] | 611[s] |
| 24 | Y-Type | 60 | 750 | 1074 | 834[s] | 610[s] |
| J | $H^+$-mordenite | 0 | --- | 1084 | 799 | 635 |
| 25 | $H^+$-mordenite | 60 | 600 | 1085[s] | 801[s] | 648 |
| 26 | $H^+$-mordenite | 45 | 700 | 1090[s] | 817, 800[s] | 658 |
| 27 | $H^+$-mordenite | 60 | 750 | 1093[s] | 826, 800[s] | 675,660[s] |
| 28 | $H^+$-mordenite | 60 | 800 | 1094[s] | 828, 802[s] | 662,652[s] |
| K | $H^+$-erionite | 0 | --- | 1071 | 796 | 643 |
| 29 | $H^+$-erionite | 60 | 750 | 1096, 1078[s] | 814[s] | 663[s] |
| L | $Na^+K^+$-erionite | 0 | --- | 1049 | 778 | 631 |
| 30 | $Na^+K^+$-erionite | 60 | 750 | 1053 | 785 | 634 |
| M | $Na^+$-mordenite | 0 | --- | 1058 | 798 | 623 |
| 31 | $Na^+$-mordenite | 60 | 750 | 1074 | 808 | 634 |
| N | $K^+$-L | 0 | --- | 1100,1026 | 769 | --- |
| 32 | $K^+$-L | 60 | 750 | 1100,1060, 1026 | 776 | --- |
| O | Y-Type | 120[a] | 700[a] | 1062 | 828 | 601 |
| P | Y-Type | 120[a] | 750[a] | 1062 | 828 | 601 |
| U | $H^+$-mordenite | 120[a] | 750[a] | 1083 | 822 | 657 |

[a] underwent calcination without chlorine treatment.

EXAMPLES 33-36 AND COMPARATIVE EXAMPLES R-U

Two samples designated as Examples 33 and 34 consisting of $Na^+$- mordenite prepared as described in Examples 30-32 and two samples designated as Examples 35 and 36 consisting of synthetic large pore hydrogen mordenite obtained from the Norton Company as described in Examples 5-7 were contacted with 100% chlorine gas for 60 minutes at the temperatures indicated in the Table VI. The samples designated as Comparative Examples R, S, T and U consisting respectively of the $Na^+$- mordenite and synthetic large pore hydrogen mordenite prepared as described above were not treated with chlorine gas. The chlorine treated samples were thereafter purged with nitrogen gas at the chlorine treatment temperatures indicated in Table VI for about 10 minutes. 5 gram samples of specified zeolites in Table VI were then Soxhlet extracted in 250 milliliters of distilled water for 2 days. The treatment data and chemical analysis data for the samples, either untreated or treated with chlorine, both before and after Soxhlet extraction, are set forth in Table VI. The lowering of cation content is a clear indication of decationization resulting from chlorine treatment of the zeolite followed by boiling water extraction. The examples also demonstrate that the major portion of retained metal chlorides can be washed out with water.

Table VI

| Example | Zeolite | Treatment Temp., °C. | Soxhlet Extraction | Dry wt.% of Oxides & Chlorides | | | | Molar Ratio | |
|---|---|---|---|---|---|---|---|---|---|
| | | | | $Al_2O_3$ | $SiO_2$ | $Na_2O$ | Cl | $Na_2O/Al_2O_3$ | $SiO_2/Al_2O_3$ |
| R | $Na^+$-mordenite | --- | No | 12.0 | 80.7 | 5.9 | --- | 0.82 | 11.5 |
| S | $Na^+$-mordenite * | --- | Yes | 8.0 | - | 4.9 | <0.01 | 1.01 | - |
| 33 | $Na^+$-mordenite * | 750 | No | 9.4 | - | 5.1 | 2.8 | 0.89 | - |
| 34 | $Na^+$-mordenite * | 750 | Yes | 9.1 | - | 2.4 | 0.25 | 0.43 | - |
| T | $H^+$-mordenite | --- | No | 9.8 | 89.4 | 0.26 | --- | 0.04 | 15.5 |
| U | $H^+$-mordenite | --- | Yes | 9.4 | - | 0.33 | <0.01 | 0.06 | - |
| 35 | $H^+$-mordenite | 750 | No | 9.8 | 90.1 | 0.28 | 1.12 | 0.05 | 15.6 |
| 36 | $H^+$-mordenite | 750 | Yes | 9.7 | - | 0.10 | 0.12 | 0.017 | - |

* Pelletized with approximately 20% dry weight of nitric acid peptized Catapal.

EXAMPLE 37 AND COMPARATIVE EXAMPLE V

One sample designated as Example 37 consisting of synthetic large pore hydrogen mordenite as described in Examples 5-7 and one sample designated as comparative Example V consisting of nitric and peptized Catapal binder as described in Examples 1-4 were contacted with 100% chlorine gas for 60 minutes at 750°C. The chlorine treated samples were thereafter purged with nitrogen gas at 750°C for about 10 minutes. A light yellow solid, followed by a brown solid, were deposited in the quartz reactor downstream of the sample and were collected by water washing and then submitted for chemical analysis with the results shown in Table VII. The results indicate that iron is one of the major components of the deposited solid, i.e., the brown solid, which is removed from the zeolite by a reaction with chlorine. These examples show that the chlorine treatment at elevated temperatures can purify zeolites by removing impurities such as iron.

The other major components of the deposited solid are aluminum and sodium which are the reaction products of framework structural aluminum and sodium with chlorine gas at elevated temperature. The results from these examples further show that the chlorine treatment at elevated temperatures can dealuminate and decationize zeolites.

As noted, the light yellow solid consisting of $AlCl_3$ or a mixture of $AlCl_3$ and other metal chlorides is the reaction product of chlorine gas with the framework aluminum. The framework aluminum is in a tetrahedral environment which can easily be changed to an octahedral environment as in the

$AlCl_3$ form. Comparative Example V using the Catapal binder alone with the aluminum already in an octahedral environment showed no yellow deposit under the same treatement conditions. Any aluminum detected in the reactor deposit is therefore removed only from the zeolite framework and not from the Catapal binder.

Table VII

| | | Solution of Reactor Deposit* | | | |
|---|---|---|---|---|---|
| Example | Zeolite | Al | Fe | Na | Si |
| 37 | $H^+$-mordenite | 185 | 345 | 28 | 8 |
| V | Catapal | 0 | 0 | 0 | 0 |

EXAMPLES 38-46 AND COMPARATIVE EXAMPLES W-AA

The effect of chlorine treatment on the catalytic properties of zeolites was evaluated using samples of both chlorine treated and non-chlorine treated zeolites. A series of three samples designated as Examples 38-40 consisting of synthetic large pore hydrogen mordenite obtained from the Norton Company as described in Examples 5-7, five samples designated as Examples 41-45 consisting of synthetic Y-type zeolite prepared as described in Examples 1-4, one sample designated as Example 46 consisting of LZ-105 as described in Examples 5-7 and one sample designated as Comparative Example AA consisting of nitric acid peptized Catapal as described in Examples 1-4 were contacted with 100%

---

*The reactor deposit values for $H^+$-mordenite are given in units of ug/g.

13078

chlorine gas for the time periods and temperatures indicated in Table VIII. The samples designated as Comparative Examples W, X, Y and Z consisting respectively of synthetic large pore hydrogen mordenite, synthetic Y-type zeolite, LZ-105 and Catapal were not treated with chlorine gas. The chlorine treated samples were thereafter purged with nitrogen gas at the chlorine treatment temperatures indicated in Table VIII for about 10 minutes. In accordance with the procedure described hereinabove in regard to evaluating the catalytic character of chlorine treated zeolite products, the first order rate constant for the catalytic cracking of 2% n-butane in helium at 500°C after 10 minutes of reaction time was determined for all of the samples. The results are set forth in Table VIII. As is readily apparent from the foregoing data, the n-butane cracking ability, and thus the acidity, of a zeolite can be altered by the chlorine treatment process of the present invention. By varying the chlorine treatment time and temperature conditions, the n-butane cracking ability using a specific zeolite can be adjusted to a desired level for a particular reaction. The results are set forth in Table VIII.

TABLE VIII

| Example | Zeolite | Treatment Conditions | | n-butane Cracking at 500°C First Order Rate Constant cc/min·g |
| | | Time, min. | Temperature, °C. | |
| W | H$^+$-mordenite | 0 | --- | 106 |
| 38 | H$^+$-mordenite | 60 | 600 | 102 |
| 39 | H$^+$-mordenite | 45 | 700 | 37 |
| 40 | H$^+$-mordenite | 60 | 800 | 0.1 |
| X | Y-Type | 0 | --- | 21 |
| 41 | Y-Type | 20 | 200 | 24 |
| 42 | Y-Type | 30 | 413 | 27 |
| 43 | Y-Type | 45 | 607 | 9.2 |
| 44 | Y-Type | 45 | 700 | 1.9 |
| 45 | Y-Type | 60 | 750 | 1.3 |
| Y | LZ-105 | 0 | --- | 0.2 |
| 46 | LZ-105 | 60 | 750 | 0.1 |
| Z | Catapal | 0 | --- | 1.7 |
| AA | Catapal | 60 | 750 | 15.1 |

13078

## Claims

1. A process for enhancing the hydrophobicity of crystalline zeolites which comprises:

(a) providing an activated crystalline zeolitic aluminosilicate having an initial $SiO_2/Al_2O_3$ molar ratio of at least 5;

(b) contacting said activated aluminosilicate with substantially pure chlorine gas at a temperature of from about $200^{\circ}C$ to about $1000^{\circ}C$ for a period of time sufficient to react the chlorine gas with a significant amount of structural aluminum in said activated aluminosilicate to increase the initial $SiO_2/Al_2O_3$ molar ratio of the activated aluminosilicate; and

(c) purging the activated aluminosilicate with a purge gas for a sufficient time to remove entrapped chlorine gas from the treated activated aluminosilicate.

2. A process according to claim 1 further comprising washing the activated aluminosilicate with water for a sufficient time to remove entrapped metal chloride species from the treated activated aluminosilicate.

3. A process according to claim 2 wherein metal cations associated with the activated aluminosilicate are replaced with non-metallic hydrogen cations by the water washing step.

4. A process according to claim 3 further comprising calcining the activated aluminosilicate at a temperature of from $500^{\circ}C$ up to the crystal destruction temperature of the zeolite

13078

5. A process according to claim 3 or claim 4 wherein the temperature of step (b) is from about 400°C to about 800°C.

6. A process according to claim 5 wherein tne activated crystalline zeolitic aluminosilicate has a crystal structure selected from the group consisting of erionite, mordenite, zeolite Y, zeolite L and zeolite LZ-105 including non-cation forms and cation forms containing cations selected from the group consisting of alkali metals, alkaline earth metals, ammonium and hydrogen.

7. A process according to claim 6 wherein tne activated crystalline zeolitic aluminosilicate of step (a) has a $SiO_2/Al_2O_3$ molar ratio of from 5 to about 190.

8. A process according to claim 7 wherein step (c) is carried out for about one hour to about four hours.

9. A process according to claim 8 wherein step (d) is carried out for about 10 minutes to about 30 minutes.

10. A process according to claim 9 wherein the purge gas is selected from the group consisting of nitrogen, dry air and the inert gases.

11. A process according to claim 1 further comprising replacing metal cations associated with the activated crystalline zeolitic aluminosilicate with nonmetallic cations selected from the group consisting of hydrogen, ammonium and quaternary ammonium species by ion exchange technique.

12. A process according to claim 11 further comprising washing the activated aluminosilicate with water for a sufficient time to remove entrapped metal chloride species from the treated activated aluminosilicate.

13. A process according to claim 12 further comprising calcining the activated aluminosilicate at a temperature of from $500^{\circ}C$ up to the crystal destruction temperature of the zeolite to remove the non-metallic cations.

14. A crystalline zeolitic aluminosilicate selected from the group consisting of the chlorine treated zeolite products identified by the numbered examples in the specification having the properties set forth for the numbered examples in Tables I through VIII and produced by the process according to claim 1.

15. A crystalline zeolitic aluminosilicate of claim 14 which has a crystal structure selected from the group consisting of erionite, mordenite, zeolite Y, zeolite L and zeolite LZ-105 including non-cation forms and cation forms containing cations selected from the group consisting of alkali metals, alkaline earth metals, ammonium and hydrogen.

**0091076**
Application number

# EUROPEAN SEARCH REPORT

EP  83 10 3120

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 699 056  (S. TAKASE et al.) <br> * Column  4, lines 43-47; column 5, lines 29-30 * | 1 | C 01 B   33/28 <br> B 01 J   20/18 <br> B 01 J   37/24 |
| X | DE-B-1 273 494  (ESSO) <br> * Claims  1,  2; column 7, lines 51-56 * | 1 | |
| D,A | US-A-4 297 335  (B.M.T. LOK) | | |
| D,A | FR-A-2 303 764  (BASF) | | |
| A | US-A-3 933 983  (C.H. ELLIOTT) | | **TECHNICAL FIELDS SEARCHED (Int. Cl. ³)** |
| A | US-A-3 691 099  (D.A. YOUNG) | | C 01 B   33/00 <br> B 01 J   20/00 <br> B 01 J   29/00 <br> B 01 J   37/00 |
| A | US-A-4 093 560  (G.T. KERR et al.) | | |

The present search report has been drawn up for all claims

| Place of search | Date of completion of the search | Examiner |
|---|---|---|
| BERLIN | 01-07-1983 | KESTEN W |